# EUROPÄISCHE PATENTSCHRIFT

(11) **EP 2 794 310 B1**
(45) Veröffentlichungstag und Bekanntmachung des Hinweises auf die Patenterteilung: **16.09.2015**
(21) Anmeldenummer: 12799072.9
(22) Anmeldetag: 06.12.2012
(51) Int. Cl.: B60G 17/052, B60G 17/015, B60G 21/10, B60G 21/073

(54) **LUFTFEDERUNGSANLAGE EINES KRAFTFAHRZEUGS**
AIR SUSPENSION SYSTEM OF A MOTOR VEHICLE
SUSPENSION PNEUMATIQUE POUR VEHICULE AUTOMOBILE

(30) Priorität: 21.12.2011 DE 102011121753
(43) Veröffentlichungstag der Anmeldung: 29.10.2014
(73) Patentinhaber: WABCO GmbH, 30453 Hannover (DE)
(72) Erfinder: GÖMANN, Tobias, 37647 Brevoerde (DE); HAVERKAMP, Michael, 30455 Hannover (DE); RUTSCH, Andreas, 30519 Hannover (DE)
(74) Vertreter: Lauerwald, Jörg
(86) Internationale Anmeldenummer: PCT/EP2012/005046
(87) Internationale Veröffentlichungsnummer: WO 2013/091787

(56) Entgegenhaltungen:
- EP-A2- 0 779 168
- WO-A1-2007/095207
- DE-A1- 19 515 255
- DE-B4-102005 032 219
- DE-C1- 19 544 622

## Beschreibung

Die Erfindung betrifft eine Luftfederungsanlage eines Kraftfahrzeugs, mit mindestens zwei Federbälgen, die auf gegenüberliegenden Fahrzeugseiten einer Fahrzeugachse angeordneten Luftfedern zugeordnet und über jeweils mit einem Niveauregelventil versehene Anschlussleitungen mit einer Hauptdruckleitung verbindbar und gegenüber dieser absperrbar sind, wobei die Hauptdruckleitung über ein Hauptdruckventil wechselweise mit einer Druckluftquelle und einer Druckluftsenke verbindbar ist, und wobei die Anschlussleitungen der mindestens zwei Federbälge über eine mit einer Drossel versehene und durch ein Sperrventil absperrbare Verbindungsleitung miteinander in Verbindung stehen.

Luftfederungsanlagen weisen gegenüber konventionellen Stahlfederungen wesentliche Vorteile auf und kommen daher zunehmend sowohl bei Nutzfahrzeugen, wie Lastkraftwagen und Omnibussen, als auch bei vorzugsweise schweren Personenfahrzeugen, wie Oberklasselimousinen und SUV's, zur Anwendung. So ermöglicht eine Luftfederungsanlage eine beladungsunabhängige Niveauregelung, da der aktuelle Beladungszustand jeweils durch eine Anpassung des Balgdruckes in den Federbälgen der Luftfedern ausgeglichen werden kann. Ebenso bietet eine Luftfederungsanlage aufgrund der progressiven Federkennlinien der Luftfedern einen besonders sicheren Fahrbahnkontakt der Räder und ein komfortables Ansprechverhalten beim Aus- und Einfedern der Räder. Ein weiterer Vorteil von Luftfederungsanlagen besteht darin, dass die Bodenfreiheit der betreffenden Fahrzeuge bedarfsweise verändert, z.B. für einen Offroad-Einsatz erhöht und für eine Schnellfahrt auf der Autobahn verringert werden kann. Bei Nutzfahrzeugen kommt hinzu, dass der Fahrzeugaufbau zum Be- und Entladen abgesenkt oder auf eine geeignete Höhe eingestellt werden kann. So kann z.B. der Fahrzeugrahmen eines luftgefederten Lastkraftwagens oder Anhängers zum Absetzen einer Wechselpritsche abgesenkt und zu deren Aufnahme wieder angehoben werden. Ebenso kann der Ladeboden eines Lastkraftwagens zur Erleichterung des Be- und Entladens durch Absenken oder Erhöhen des Balgdruckes an der Hinterachse auf das Niveau einer Laderampe eingestellt werden. Bei luftgefederten Omnibussen kann der fahrbahnäußere Fahrzeugaufbau zur Erleichterung des Ein- und Aussteigens der Fahrgäste durch Ablassen der Druckluft aus den fahrbahnäußeren Federbälgen abgesenkt und anschließend durch eine Befüllung der Federbälge wieder angehoben werden.

Wenn der Fahrzeugaufbau an einer Fahrzeugachse nur gleichmäßig angehoben und abgesenkt werden soll, reicht ein einziges Niveauregelventil zur Belüftung und Entlüftung der betreffenden Federbälge aus. Um hierbei durch einen geringen Druckluftaustausch auftretende Druckunterschiede, die sich z.B. aus einseitigen Leckageverlusten ergeben können, selbsttätig auszugleichen, ist bei vielen Luftfederungsanlagen im Ruhezustand, d.h. bei geschlossenem Niveauregelventil, eine gedrosselte Verbindung der mindestens zwei Luftfederbälge vorgesehen.

Eine entsprechende Ventilanordnung ist beispielsweise bei der Luftfederungsanlage gemäß der DE 195 44 622 C1 bekannt. In einer Ausführungsform dieser bekannten Luftfederungsanlage gemäß der dortigen Fig. 5 sind die zwei auf gegenüberliegenden Fahrzeugseiten einer Fahrzeugachse angeordneten Luftfedern zugeordneten Federbälge über ein einziges Niveauregelventil und zwei zusammengeschlossene Anschlussleitungen be- und entlüftbar. Dem Niveauregelventil ist in Belüftungsrichtung ein 3/2-Wege-Schaltventil nachgeschaltet, durch das die beiden Anschlussleitungen in einer ersten Schaltstellung (Ruhestellung) mit dem Niveauregelventil verbunden und in einer zweiten Schaltstellung (Betätigungsstellung) gegenüber dem Niveauregelventil abgesperrt sowie über eine Drossel miteinander verbunden sind. Durch eine entsprechende Ansteuerung eines zugeordneten Vorsteuerventils wird das 3/2-Wege-Schaltventil während der Fahrt in der Betätigungsstellung gehalten, so dass ein begrenzter Druckluft- bzw. Druckausgleich zwischen den beiden Federbälgen erfolgen kann. Das einseitige Absenken und Anheben des Fahrzeugaufbaus ist mit dieser bekannten Luftfederungsanlage allerdings nicht möglich.

Die DE19515255A1 beschreibt eine Niveauregeleinrichtung zur Regelung des Abstandes zwischen Fahrzeugchassis und einem Fahrzeugaufbau. Die Niveauregeleinrichtung bewirkt, dass der Druck in Druckmittelkammern, welche den Fahrzeugaufbau tragen, in Abhängigkeit von Wegsensormesswerten verändert wird. Ein besonderer Bereich des Fahrzeugaufbaus kann zu bestimmten Zeiten abgesenkt werden und nach einer Haltezeit wieder auf den Normalstand angehoben werden.

In der DE 10 2005 032 219 B4 sind dagegen mehrere Ausführungsformen einer Luftfederungsanlage beschrieben, bei denen jeweils die zwei auf gegenüberliegenden Fahrzeugseiten einer Fahrzeugachse angeordneten Luftfedern zugeordneten Federbälge über jeweils ein in einer zugeordneten Anschlussleitung angeordnetes Niveauregelventil be- und entlüftbar sind. Die Anschlussleitungen der betreffenden zwei Federbälge stehen über eine mit einer Drossel versehene und durch ein Sperrventil absperrbare Verbindungsleitung miteinander in Verbindung, so dass der begrenzte Druckluft- bzw. Druckausgleich zwischen den beiden Federbälgen bedarfsweise unterbrochen werden kann. Da vorliegend beide Niveauregelventile von einem gemeinsamen Vorsteuerventil ansteuerbar sind, ist auch bei dieser bekannten Luftfederungsanlage das einseitige Absenken und Anheben des Fahrzeugaufbaus nicht möglich. Es ist jedoch denkbar, dass dieser Nachteil auf einfache Weise durch eine separate Ansteuerung der beiden Niveauregelventile behoben wird.

Mit dieser Änderung besteht somit die Möglichkeit, den Fahrzeugaufbau einseitig abzusenken und wieder anzuheben, was z.B. bei einem Omnibus zur Erleichterung des Ein- und Aussteigens der Fahrgäste genutzt werden kann. Ebenso ist es in diesem Fall möglich, durch unterschiedliche Belüftung der Federbälge bei seitlich ungleicher Lastverteilung eines Lastkraftwagens eine sich sonst ergebende Schrägstellung des Fahrzeugaufbaus auszugleichen. Hierzu ist jedoch jeweils eine Absperrung der Verbindungsleitung zwischen den Federbälgen durch das Sperrventil erforderlich, da ein Druckausgleich zwischen den Federbälgen in diesen Fällen nachteilig und unerwünscht ist. Die übliche Ausbildung des Sperrventils als ein Magnetschaltventil oder als ein druckgesteuertes, von einem als Magnetschaltventil ausgebildeten Vorsteuerventil ansteuerbares Schaltventil stellt einen gewissen Kostenfaktor dar und ist mit einem erhöhten Störungsrisiko verbunden.

Der vorliegenden Erfindung liegt daher die Aufgabe zugrunde, eine Luftfederungsanlage eines Kraftfahrzeugs der eingangs genannten Art vorzuschlagen, bei welcher eine bedarfsweise Absperrung der Verbindungsleitung zwischen den Federbälgen auf einfachere und kostengünstigere Art und Weise realisiert ist.

Eine erste erfindungsgemäße Lösung dieser Aufgabe besteht in Verbindung mit den Merkmalen des Oberbegriffs des Anspruchs 1 darin, dass das Sperrventil mechanisch ansteuerbar ausgebildet und derart mit dem Niveauregelventil des auf der fahrbahnäußeren Fahrzeugseite angeordneten Federbalgs gekoppelt ist, dass das Sperrventil bei geschlossenem Niveauregelventil geöffnet und bei geöffnetem Niveauregelventil geschlossen ist.

Die Erfindung geht demnach aus von einer an sich bekannten Luftfederungsanlage eines Kraftfahrzeugs, die mindestens zwei Federbälge umfasst, die auf gegenüberliegenden Fahrzeugseiten einer Fahrzeugachse angeordneten Luftfedern zugeordnet und über jeweils mit einem Niveauregelventil versehene Anschlussleitungen mit einer Hauptdruckleitung verbindbar sowie gegenüber dieser absperrbar sind. Falls das Kraftfahrzeug eine Tandemachse bzw. zwei in kurzem Abstand montierte Fahrzeugachsen aufweist, kann es sich sinngemäß auch um vier Federbälge handeln, die paarweise auf gegenüberliegenden Fahrzeugseiten angeordnet und über jeweils mit einem Niveauregelventil versehene Anschlussleitungen mit einer Hauptdruckleitung verbindbar und gegenüber dieser absperrbar sind. Die Hauptdruckleitung ist über ein Hauptdruckventil wechselweise mit einer Druckluftquelle und einer Druckluftsenke verbindbar. Die Anschlussleitungen der mindestens zwei Federbälge stehen über eine mit einer Drossel versehene und durch ein Sperrventil absperrbare Verbindungsleitung miteinander in Verbindung.

Um nun bei einer derartigen Luftfederungsanlage auf einfache und kostengünstige Weise die Möglichkeit zu schaffen, die gedrosselte Verbindung der mindestens zwei Federbälge beim einseitigen Anheben und Absenken des Fahrzeugaufbaus über das Sperrventil abzusperren, ist das Sperrventil erfindungsgemäß mechanisch ansteuerbar ausgebildet und derart mit dem Niveauregelventil des auf der fahrbahnäußeren Fahrzeugseite angeordneten Federbalgs gekoppelt, dass das Sperrventil bei geschlossenem Niveauregelventil geöffnet und bei geöffnetem Niveauregelventil geschlossen ist.

Somit wird das Sperrventil automatisch über das betreffende Niveauregelventil geschlossen, wenn dieses zum einseitigen Belüften oder Entlüften des auf der fahrbahnäußeren Fahrzeugseite angeordneten Federbalgs, d.h. dem einseitigen Anheben oder Absenken des Fahrzeugaufbaus, geöffnet wird. Wenn das betreffende Niveauregelventil dagegen geschlossen ist, was außerhalb von Be- und Entlüftungsvorgängen, insbesondere auch während der Fahrt, der Fall ist, ist das Sperrventil geöffnet und somit ein geringer Druck- und Luftaustausch zwischen den beiden Federbälgen möglich. Das automatische Schließen des Sperrventils bei unterschiedlicher Belüftung der Federbälge zum Ausgleich einer seitlich ungleichen Lastverteilung ist mit dieser Ventilanordnung allerdings nicht möglich.

Zur Reduzierung des Montageaufwands ist bevorzugt vorgesehen, dass die Verbindungsleitung, die Drossel und das Sperrventil zumindest zusammen mit den beiden Niveauregelventilen in einem gemeinsamen Ventilblock angeordnet sind. Wenn das Sperrventil und das betreffende Niveauregelventil weitgehend koaxial innerhalb einer gemeinsamen Ventilbohrung angeordnet sind, reicht bei dieser Ventilanordnung ein Zweifach-Ventilblock aus. Selbstverständlich können die genannten Schaltventile und Bauteile aber auch zusammen mit dem Hauptdruckventil und weiteren Niveauregelventilen, deren Federbälge den Luftfedern anderer Fahrzeugachsen zugeordnet sind, in einem gemeinsamen Ventilblock zusammengefasst sein.

In einer bevorzugten praktischen Ausführungsform eines derartigen Ventilblockes, bei dem die beiden Niveauregelventile als Sitzventile ausgebildet sind, die in radial benachbarten Ventilbohrungen eines Gehäuses des Ventilblockes angeordnet sind und jeweils eine durch eine Druckfeder über einen Federteller gegen einen Ventilsitz gedrückte Ventilplatte aufweisen, ist vorgesehen, dass die Verbindungsleitung und die Drossel als eine Drosselbohrung ausgebildet sind, die in einem Anschlussdeckel des Ventilblockes angeordnete Anschlussbohrungen der beiden Niveauregelventile miteinander verbindet, dass das Sperrventil als ein Sitzventil ausgebildet ist, das innerhalb des Niveauregelventils des auf der fahrbahnäußeren Fahrzeugseite angeordneten Federbalgs angeordnet ist, und welches einen in die betreffende Anschlussbohrung eingesetzten Ventileinsatz mit einer über eine Ringnut mit der Drosselbohrung in Verbindung stehenden und axial in einem Ventilsitz endenden Verbindungsbohrung sowie einen Dichtungsblock aufweist, der auf der dem Ventilsitz abgewandten Seite mit dem betreffenden Federteller in Kontakt steht, und der auf der dem Ventilsitz zugewandten Seite mit einem Dichtelement versehen und von einer Druckfeder gegen den Federteller gedrückt wird.

Bei dieser bevorzugten Ausführungsform sind die Verbindungsleitung, die Drossel und das Sperrventil somit ohne zusätzlichen Platzbedarf in den Ventilblock integriert. Wenn beim Öffnen des betreffenden Niveauregelventils die zugeordnete Ventilplatte von dem betreffenden Steuerkolben gegen die Rückstellkraft der Druckfeder in Richtung der zugeordneten Anschlussbohrung verschoben wird, so wird zugleich der Dichtungsblock des Sperrventils von dem Federteller gegen die Rückstellkraft der betreffenden Druckfeder auf den zugeordneten Ventilsitz gedrückt und somit die Verbindungsbohrung geschlossen. Damit ist die gedrosselte Verbindung der Anschlussbohrungen der beiden Niveauregelventile über die Drosselbohrung wie vorgesehen abgesperrt.

Eine zweite erfindungsgemäße Lösung der gestellten Aufgabe besteht in Verbindung mit dem Oberbegriff des Anspruchs 4 darin, dass das Sperrventil mechanisch ansteuerbar ausgebildet und derart mit dem Hauptdruckventil gekoppelt ist, dass das Sperrventil bei mit der Druckluftquelle verbundener Hauptdruckleitung geöffnet und bei mit der Druckluftsenke verbundener Hauptdruckleitung geschlossen ist.

Dieser zweiten Lösungsvariante liegt dieselbe, an sich bekannte Luftfederungsanlage eines Kraftfahrzeugs zu Grunde wie der ersten erfindungsgemäßen Lösungsvariante. Um bei einer derartigen Luftfederungsanlage auf einfache und kostengünstige Weise die Möglichkeit zu schaffen, die gedrosselte Verbindung der mindestens zwei Federbälge beim einseitigen Anheben und Absenken des Fahrzeugaufbaus sowie bei unterschiedlicher Druckbefüllung der Federbälge über das Sperrventil abzusperren, ist das Sperrventil erfindungsgemäß mechanisch ansteuerbar ausgebildet und derart mit dem Hauptdruckventil gekoppelt, dass das Sperrventil bei mit der Druckluftquelle verbundener Hauptdruckleitung geöffnet und bei mit der Druckluftsenke verbundener Hauptdruckleitung geschlossen ist.

Somit wird das Sperrventil automatisch über das Hauptdruckventil geschlossen, wenn die Hauptdruckleitung über das Hauptdruckventil mit der Druckluftsenke verbunden ist, d.h. drucklos geschaltet ist. Das Sperrventil ist daher sowohl bei einem einseitigen Entlüften z.B. des auf der fahrbahnäußeren Fahrzeugseite angeordneten Federbalgs als auch bei einem gemeinsamen Entlüften beider Federbälge geschlossen. Bei einem einseitigen Belüften z.B. des auf der fahrbahnäußeren Fahrzeugseite angeordneten Federbalgs ist das Sperrventil während des Anhebens des Fahrzeugaufbaus auf der betreffenden Fahrzeugseite geöffnet und verbindet die Hauptdruckleitung mit der zumeist durch einen Druckspeicher gebildeten Druckluftquelle. Ein dabei möglicher Druckausgleich zwischen den Federbälgen wird aber durch die Drossel begrenzt und kann durch das Umschalten des Hauptdruckventils nach dem Anheben des Fahrzeugaufbaus schnell beendet werden.

Wenn sich das Hauptdruckventil in seiner Ruhestellung befindet, in der die Hauptdruckleitung drucklos geschaltet ist, was außerhalb von Be- und Entlüftungsvorgängen, insbesondere auch während der Fahrt, der Fall ist, ist das Sperrventil geschlossen und somit ein Druckausgleich zwischen den beiden Federbälgen nicht möglich. Wenn aber ein begrenzter Druckaustausch zwischen den beiden Federbälgen dennoch erwünscht ist, so kann dieser durch die Umschaltung des Hauptdruckventils und dem damit verbundenen Öffnen des Sperrventils auf einfache Weise ermöglicht werden.

Auch in diesem Fall sollten zur Reduzierung des Montageaufwands die Verbindungsleitung, die Drossel und das Sperrventil zumindest zusammen mit dem Hauptdruckventil in einem gemeinsamen Ventilblock angeordnet sein, was bei weitgehend koaxialer Anordnung der beiden Schaltventile innerhalb einer gemeinsamen Ventilbohrung nur die Verwendung eines Einfach-Ventilblockes erfordert. Die genannten Schaltventile und Bauteile können aber auch zusammen mit den beiden Niveauregelventilen der betreffenden Fahrzeugachse und weiteren Niveauregelventilen, deren Federbälge den Luftfedern anderer Fahrzeugachsen zugeordnet sind, in einem gemeinsamen Ventilblock zusammengefasst sein.

Zur weiteren Verdeutlichung der Erfindung ist der Beschreibung eine Zeichnung mit mehreren Ausführungsbeispielen beigefügt. In dieser zeigt
Fig. 1 den schematischen Aufbau der Ventilanordnung einer ersten Ausführungsform der erfindungsgemäßen Luftfederungsanlage eines Kraftfahrzeugs,
Fig. 2 eine bevorzugte Bauform eines Ventilblockes der erfindungsgemäßen Luftfederungsanlage gemäß Fig. 1 in einer Schnittdarstellung,
Fig. 3 den schematischen Aufbau der Ventilanordnung einer zweiten Ausführungsform der erfindungsgemäßen Luftfederungsanlage eines Kraftfahrzeugs, und
Fig. 4 den schematischen Aufbau der Ventilanordnung einer bekannten Luftfederungsanlage eines Kraftfahrzeugs.

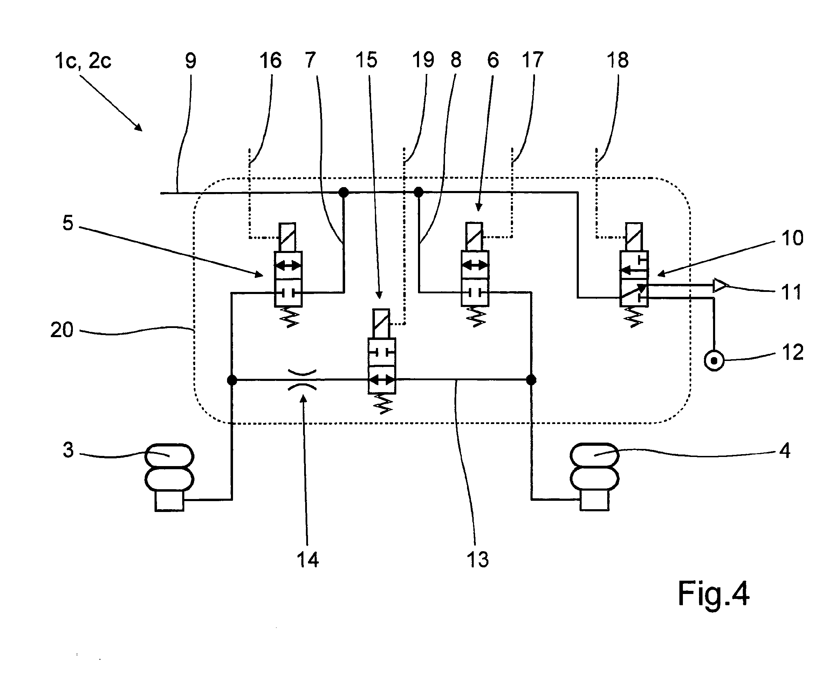

Eine in Fig. 4 in schematischer Form dargestellte Ventilanordnung 2c einer bekannten Luftfederungsanlage 1 c eines Kraftfahrzeugs weist einen ersten Federbalg 3 sowie einen zweiten Federbalg 4 auf, die auf gegenüberliegenden Fahrzeugseiten einer Fahrzeugachse angeordneten Luftfedern zugeordnet und über jeweils mit einem Niveauregelventil 5, 6 versehene Anschlussleitungen 7, 8 mit einer Hauptdruckleitung 9 verbindbar sowie gegenüber dieser absperrbar sind. Die Niveauregelventile 5, 6 sind als 2/2-Wege-Magnetschaltventile ausgebildet, die in einer ersten Schaltstellung (Ruhestellung) geschlossen und in einer zweiten Schaltstellung (Betätigungsstellung) geöffnet sind. Zudem ist ein als 3/2-Wege-Magnetschaltventil ausgebildetes Hauptdruckventil 10 vorhanden, über das die Hauptdruckleitung 9 in einer ersten Schaltstellung (Ruhestellung) mit einer Druckluftsenke 11, wie z.B. der Umgebungsluft, und in einer zweiten Schaltstellung (Betätigungsstellung) mit einer Druckluftquelle 12, wie z.B. einem Druckspeicher, in Verbindung steht.

Die Anschlussleitungen 7, 8 der beiden Federbälge 3, 4 stehen über eine mit einer Drossel 14 versehene und durch ein Sperrventil 15 absperrbare Verbindungsleitung 13 miteinander in Verbindung. Das Absperrventil 15 ist als ein 2/2-Wege-Magnetschaltventil ausgebildet, das in einer ersten Schaltstellung (Ruhestellung) geöffnet und in einer zweiten Schaltstellung (Betätigungsstellung) geschlossen ist. Die Elektromagneten der Magnetschaltventile 5, 6, 10, 15 stehen über jeweils eine elektrische Steuerleitung 16, 17, 18, 19 mit einem nicht näher dargestellten elektronischen Steuergerät in Verbindung. Die Magnetschaltventile 5, 6, 10, 15 und die Verbindungsleitung 13 mit der Drossel 14 sind vorliegend beispielhaft in einem Vierfach-Ventilblock 20 zusammengefasst.

Die beiden Federbälge 3, 4 sind durch das Öffnen der zugeordneten Niveauregelventile 5, 6 unabhängig voneinander belüftbar, wenn das Hauptdruckventil 10 in seiner Betätigungsstellung umgeschaltet ist, und die Hauptdruckleitung 9 demzufolge mit der Druckluftquelle 12 verbunden ist. Ebenso sind die beiden Federbälge 3, 4 durch das Öffnen der zugeordneten Niveauregelventile 5, 6 unabhängig voneinander entlüftbar, wenn sich das Hauptdruckventil 10 in seiner Ruhestellung befindet, und die Hauptdruckleitung 9 demzufolge mit der Druckluftsenke 11 verbunden ist, d.h. drucklos geschaltet ist. Die gedrosselte Verbindung der beiden Federbälge 3, 4 über die mit der Drossel 14 versehene Verbindungsleitung 13 kann durch die Betätigung des Sperrventils 15 bedarfsweise abgesperrt, d.h. unterbrochen werden. Die Ausbildung des Sperrventils 15 als ein Magnetschaltventil stellt einen gewissen Kostenfaktor dar und ist mit einem erhöhten Störungsrisiko verbunden. Ebenfalls ist muss das Sperrventil nachteilig im geschlossenen Zustand mit elektrischer Energie in seiner Betätigungsstellung gehalten werden.

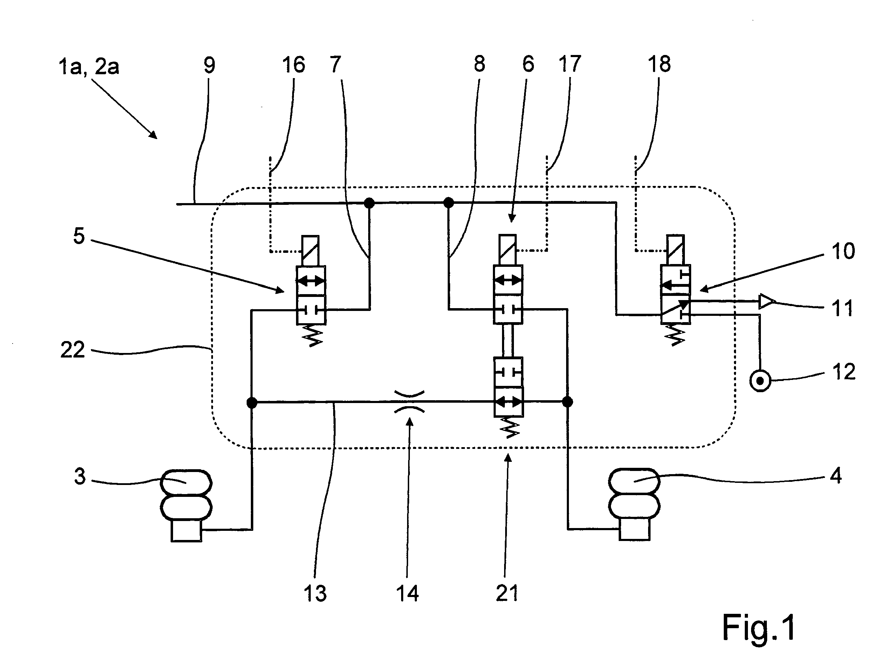

Eine in Fig. 1 in schematischer Form dargestellte Ventilanordnung 2a einer ersten Ausführungsform der erfindungsgemäßen Luftfederungsanlage 1a eines Kraftfahrzeugs weist demgegenüber ein mechanisch ansteuerbar ausgebildetes Sperrventil 21 auf, das derart mit einem Niveauregelventil 6 der beiden Niveauregelventile 5, 6 mechanisch gekoppelt ist, dass das Sperrventil 21 bei geschlossenem Niveauregelventil 6 geöffnet und bei geöffnetem Niveauregelventil 5, 6 geschlossen ist. Bei dem betreffenden Niveauregelventil 6 handelt es sich vorliegend um dasjenige, welches dem auf der fahrbahnäußeren Fahrzeugseite angeordneten Federbalg 4, d.h. bei einem für Rechtsfahrbetrieb vorgesehenem Kraftfahrzeug dem rechten Federbalg 4 zugeordnet ist. Bei einem für den Linksfahrbetrieb vorgesehenen Kraftfahrzeug wäre das Sperrventil 21 entsprechend mit dem Niveauregelventil 5 gekoppelt, das dem linken Federbalg 3 der betreffenden Fahrzeugachse zugeordnet ist.

Das Sperrventil 21 wird somit automatisch über das betreffende Niveauregelventil 6 geschlossen, wenn letzteres zum einseitigen Belüften oder Entlüften des auf der fahrbahnäußeren Fahrzeugseite angeordneten Federbalgs 4, d.h. zum einseitigen Anheben oder Absenken des Fahrzeugaufbaus, geöffnet wird. Wenn das betreffende Niveauregelventil 6 dagegen geschlossen ist, was außerhalb von Be- und Entlüftungsvorgängen, insbesondere auch während der Fahrt, der Fall ist, ist das Sperrventil 21 geöffnet und somit ein geringer Druck- und Luftaustausch zwischen den beiden Federbälgen 3, 4 möglich.

Das automatische Schließen des Sperrventils 21 bei unterschiedlicher Belüftung der Federbälge 3, 4 zum Ausgleich einer seitlich ungleichen Lastverteilung ist mit dieser Ventilanordnung 2a allerdings nicht möglich. Da das Sperrventil 21 und das betreffende Niveauregelventil 6 weitgehend koaxial innerhalb einer gemeinsamen Ventilbohrung angeordnet werden können, reicht für die Zusammenfassung der vier Schaltventile 5, 6, 10, 21 sowie der mit der Drossel 14 versehenen Verbindungsleitung 13 ein Dreifach-Ventilblock 22 aus.

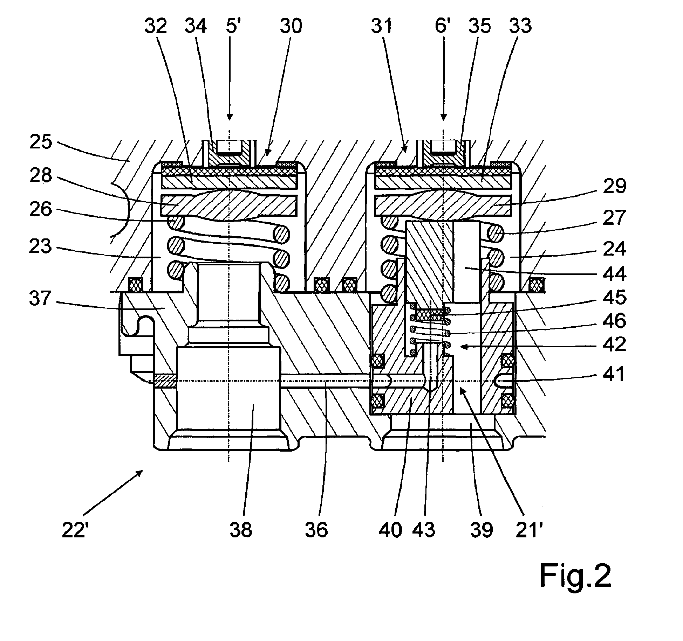

Eine bevorzugte Bauform eines derartigen Ventilblockes 22' der erfindungsgemäßen Luftfederungsanlage 1a gemäß Fig. 1 ist teilweise in Fig. 2 in einer Schnittdarstellung abgebildet. In diesem Ventilblock 22' sind die beiden Niveauregelventile 5', 6' im Unterschied zu der schematischen Darstellung in Fig. 1 als Sitzventile ausgebildet, die in radial benachbarten Ventilbohrungen 23, 24 eines Gehäuses 25 des Ventilblockes 22' angeordnet sind und jeweils eine durch eine als Schraubenfeder ausgebildete Druckfeder 26, 27 über einen Federteller 28, 29 gegen einen Ventilsitz 30, 31 gedrückte Ventilplatte 32, 33 aufweisen. Zum Öffnen der beiden Niveauregelventile 5', 6' wird die jeweilige Ventilplatte 32, 33 von einem zugeordneten Steuerkolben 34, 35, der dann jeweils über ein in dem Ausschnitt von Fig. 2 nicht abgebildetes Vorsteuerventil mit Druckluft beaufschlagt wird, gegen die Rückstellkraft der betreffenden Druckfeder 26, 27 nach unten gedrückt.

Die Verbindungsleitung 13 und die Drossel 14 der Fig. 1 sind vorliegend als eine Drosselbohrung 36 ausgebildet, die in einem Anschlussdeckel 37 des Ventilblocks 22' angeordnete Anschlussbohrungen 38, 39 der beiden Niveauregelventile 5', 6' strömungstechnisch miteinander verbindet.

Das Sperrventil 21' ist vorliegend ebenfalls als ein Sitzventil ausgebildet, das innerhalb des zweiten Niveauregelventils 6' des auf der fahrbahnäußeren Fahrzeugseite angeordneten Federbalgs 4 angeordnet ist. Das Sperrventil 21' weist einen in die betreffende Anschlussbohrung 39 eingesetzten Ventileinsatz 40 mit einer über eine Ringnut 41 mit der Drosselbohrung 36 in Verbindung stehenden und axial in einem Ventilsitz 42 endenden Verbindungsbohrung 43 sowie einen Dichtungsblock 44 auf. Der Dichtungsblock 44 steht auf der vom Ventilsitz 42 abgewandten Seite mit dem betreffenden Federteller 29 des zweiten Niveauregelventils 6' in Kontakt, und ist auf der dem Ventilsitz 42 zugewandten Seite mit einem Dichtelement 45 versehen. Außerdem wird der Dichtungsblock 44 von einer als Schraubenfeder ausgebildeten dritten Druckfeder 46 gegen den Federteller 29 gedrückt, wobei sich diese dritte Druckfeder 46 mit ihrem anderen Ende am Ventileinsatz 40 abstützt.

Bei dieser bevorzugten Ausführungsform sind die durch die Drosselbohrung 36 gebildete Verbindungsleitung 13 (siehe Fig. 1) und die Drossel 14 (siehe Fig. 1) sowie das Sperrventil 21' somit ohne zusätzlichen Platzbedarf in den Ventilblock 22' integriert. Wenn beim Öffnen des zweiten Niveauregelventils 6' die zugeordnete Ventilplatte 33 von dem zugeordneten Steuerkolben 35 gegen die Rückstellkraft der Druckfeder 27 in Richtung zu der zugeordneten Anschlussbohrung 39 verschoben wird, so wird zugleich der Dichtungsblock 44 des Sperrventils 21' von dem Federteller 29 gegen die Rückstellkraft der dritten Druckfeder 46 auf den zugeordneten Ventilsitz 42 gedrückt und somit die Verbindungsbohrung 43 geschlossen. Damit ist die gedrosselte Verbindung der Anschlussbohrungen 38, 39 der beiden Niveauregelventile 5', 6' über die Drosselbohrung 36, wie vorgesehen, abgesperrt.

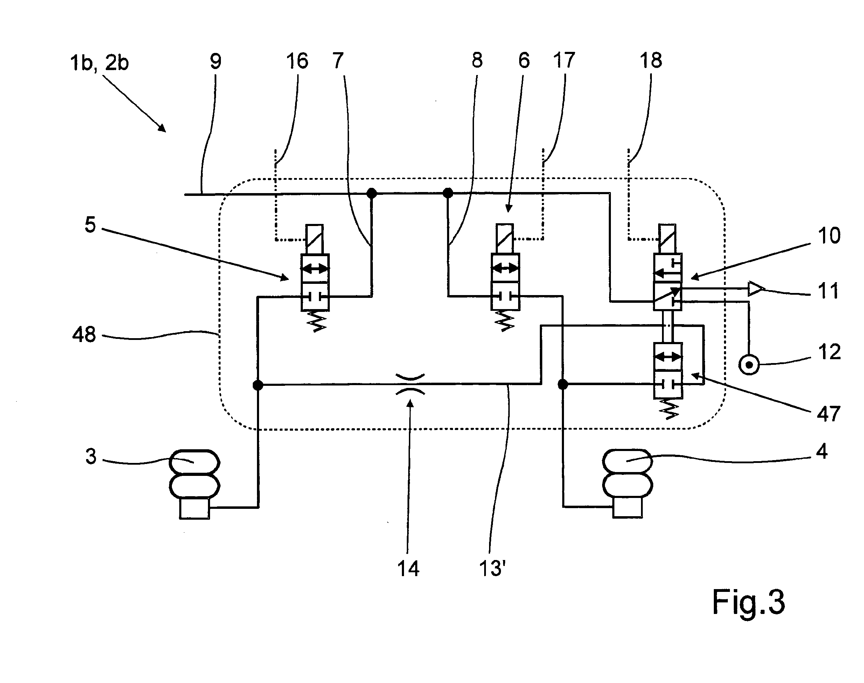

Eine in Fig. 3 in schematischer Form dargestellte Ventilanordnung 2b einer zweiten Ausführungsform der erfindungsgemäßen Luftfederungsanlage 1b eines Kraftfahrzeugs weist im Unterschied zu der Ventilanordnung 2c der bekannten Luftfederungsanlage 1c gemäß Fig. 4 ein mechanisch ansteuerbar ausgebildetes Sperrventil 47 auf, das derart mit dem Hauptdruckventil 10 gekoppelt ist, dass das Sperrventil 47 bei mit der Druckluftquelle 12 verbundener Hauptdruckleitung 9 geöffnet und bei mit der Druckluftsenke 11 verbundener Hauptdruckleitung 9 geschlossen ist. Entsprechend ist die Verbindungsleitung 13' nunmehr über das weitgehend koaxial in einer gemeinsamen Ventilbohrung mit dem Hauptdruckventil 10 angeordnete Sperrventil 47 geführt. Das erste Niveauregelventil 5, das zweite Niveauregelventil 6, das Hauptdruckventil 10, das Sperrventil 47 sowie die mit der Drossel 14 versehene Verbindungsleitung 13' sind in einem Dreifach-Ventilblock 48 zusammengefasst.

Bei dieser Ventilanordnung 2b wird das Sperrventil 47 somit automatisch bei einer Betätigung des Hauptdruckventils 10 geschlossen, nämlich dann, wenn die Hauptdruckleitung 9 über das Hauptdruckventil 10 mit der Druckluftsenke 11 verbunden ist, d.h. drucklos geschaltet ist. Das Sperrventil 47 ist daher sowohl bei einem einseitigen Entlüften z.B. des auf der fahrbahnäußeren Fahrzeugseite angeordneten Federbalgs 4 als auch bei einem gemeinsamen Entlüften beider Federbälge 3, 4 geschlossen. Bei einem einseitigen Belüften z.B. des auf der fahrbahnäußeren Fahrzeugseite angeordneten Federbalgs 4 ist das Sperrventil 47 während des Anhebens des Fahrzeugaufbaus auf der betreffenden Fahrzeugseite geöffnet und verbindet die Hauptdruckleitung 9 mit der zumeist durch einen Druckspeicher gebildeten Druckluftquelle 12. Ein dabei möglicher Druckausgleich zwischen den Federbälgen 3,4 wird aber durch die Drossel 14 begrenzt und kann durch das Umschalten des Hauptdruckventils 10 nach dem Anheben des Fahrzeugaufbaus schnell beendet werden.

Wenn sich das Hauptdruckventil 10 in seiner Ruhestellung befindet, in der die Hauptdruckleitung 9 drucklos geschaltet ist, was außerhalb von Be- und Entlüftungsvorgängen, insbesondere auch während der Fahrt, der Fall ist, ist das Sperrventil 47 geschlossen und somit ein Druckausgleich zwischen den beiden Federbälgen 3, 4 nicht möglich. Sofern aber ein begrenzter Druckaustausch zwischen den beiden Federbälgen 3, 4 dennoch erwünscht ist, so kann dieser durch die Umschaltung des Hauptdruckventils 10 und dem damit verbundenen Öffnen des Sperrventils 47 auf einfache Weise ermöglicht werden. Dabei wird zwar die Hauptdruckleitung 9 unter Druck gesetzt, das erste und das zweite Niveauregelventil 5, 6 sind aber unbetätigt, also geschlossen. Es ist bei dieser Betätigungsstellung des Sperrventils 47 (also Sperrventil 47 ist offen und Hauptdruckleitung 9 ist unter Druck) aber auch ein Niveauausgleich während der Fahrt möglich, indem das erste oder das zweite Niveauregelventile 5, 6 oder beide Niveauregelventile 5, 6 geöffnet wird bzw. geöffnet werden, um den jeweils zugeordneten Federbalg oder beide Federbälge 3, 4 zu belüften.

Die mechanisch wirkverbundene Kombination von Hauptdruckventil 10 und Sperrventil 47 gemäß Fig. 3 könnte in einer praktischen Ausführungsform genauso oder ähnlich aufgebaut sein wie das in Fig. 2 in der rechten Zeichnungshälfte dargestellte Niveauregelventil 6'. Insoweit wird auch Bezug auf die zugehörige Beschreibung genommen.

### Bezugszeichen

- 1a - 1c: Luftfederungsanlage
- 2a - 2c: Ventilanordnung
- 3: Erster bzw. linker Federbalg
- 4: Zweiter bzw. rechter Federbalg
- 5, 5': Erstes Niveauregelventil
- 6, 6': Zweites Niveauregelventil
- 7: Erste Anschlussleitung
- 8: Zweite Anschlussleitung
- 9: Hauptdruckleitung
- 10: Hauptdruckventil
- 11: Druckluftsenke
- 12: Druckluftquelle
- 13, 13': Verbindungsleitung
- 14: Drossel
- 15: Sperrventil
- 16: Elektrische Steuerleitung
- 17: Elektrische Steuerleitung
- 18: Elektrische Steuerleitung
- 19: Elektrische Steuerleitung
- 20: Vierfach-Ventilblock
- 21, 21': Absperrventil
- 22, 22': Dreifach-Ventilblock
- 23: Erste Ventilbohrung
- 24: Zweite Ventilbohrung
- 25: Gehäuse
- 26: Erste Druckfeder, Schraubenfeder
- 27: Zweite Druckfeder, Schraubenfeder
- 28: Erster Federteller
- 29: Zweiter Federteller
- 30: Erster Ventilsitz
- 31: Zweiter Ventilsitz
- 32: Erste Ventilplatte
- 33: Zweite Ventilplatte
- 34: Erster Steuerkolben
- 35: Zweiter Steuerkolben
- 36: Drosselbohrung
- 37: Anschlussdeckel
- 38: Erste Anschlussbohrung
- 39: Zweite Anschlussbohrung
- 40: Ventileinsatz
- 41: Ringnut
- 42: Ventilsitz
- 43: Verbindungsbohrung
- 44: Dichtungsblock
- 45: Dichtelement
- 46: Dritte Druckfeder, Schraubenfeder
- 47: Sperrventil
- 48: Dreifach-Ventilblock

## Patentansprüche

1. Luftfederungsanlage eines Kraftfahrzeugs, mit mindestens zwei Federbälgen (3, 4), die auf gegenüberliegenden Fahrzeugseiten einer Fahrzeugachse angeordneten Luftfedern zugeordnet und über jeweils mit einem Niveauregelventil (5, 6) versehene Anschlussleitungen (7, 8) mit einer Hauptdruckleitung (9) verbindbar und gegenüber dieser absperrbar sind, wobei die Hauptdruckleitung (9) über ein Hauptdruckventil (10) wechselweise mit einer Druckluftquelle (12) und einer Druckluftsenke (11) verbindbar ist, und wobei die Anschlussleitungen (7, 8) der mindestens zwei Federbälge (3, 4) über eine mit einer Drossel (14) versehene und durch ein Sperrventil absperrbare Verbindungsleitung (13) miteinander in Verbindung stehen, **dadurch gekennzeichnet, dass** das Sperrventil (21) mechanisch ansteuerbar ausgebildet und derart mit dem Niveauregelventil (6) des auf der fahrbahnäußeren Fahrzeugseite angeordneten Federbalgs (4) gekoppelt ist, dass das Sperrventil (21) bei geschlossenem Niveauregelventil (6) geöffnet und bei geöffnetem Niveauregelventil (6) geschlossen ist.

2. Luftfederungsanlage nach Anspruch 1, **dadurch gekennzeichnet, dass** die Verbindungsleitung (13), die Drossel (14) und das Sperrventil (21) zumindest zusammen mit den beiden Niveauregelventilen (5, 6) in einem gemeinsamen Ventilblock (22) angeordnet sind.

3. Luftfederungsanlage nach Anspruch 2, **dadurch gekennzeichnet, dass** die beiden Niveauregelventile (5', 6') als Sitzventile ausgebildet sind, die in radial benachbarten Ventilbohrungen (23, 24) eines Gehäuses (25) des Ventilblockes (22') angeordnet sind und jeweils eine durch eine Druckfeder (26, 27) über einen Federteller (28, 29) gegen einen Ventilsitz (30, 31) gedrückte Ventilplatte (32, 33) aufweisen, dass die Verbindungsleitung (13) und die Drossel (14) als eine Drosselbohrung (36) ausgebildet sind, die in einem Anschlussdeckel (37) des Ventilblockes (22') angeordnete Anschlussbohrungen (38, 39) der beiden Niveauregelventile (5', 6') miteinander verbindet, und dass das Sperrventil (21') als ein Sitzventil ausgebildet ist, das innerhalb des Niveauregelventils (6') des auf der fahrbahnäußeren Fahrzeugseite angeordneten Federbalgs (4) angeordnet ist, und dass das Sperrventil (21') einen in die betreffende Anschlussbohrung (39) eingesetzten Ventileinsatz (40) aufweist, mit einer über eine Ringnut (41) mit der Drosselbohrung (36) in Verbindung stehenden und axial in einem Ventilsitz (42) endenden Verbindungsbohrung (43) sowie mit einem Dichtungsblock (44), der auf der dem Ventilsitz (42) abgewandten Seite mit dem betreffenden Federteller (29) in Kontakt steht, und der auf der dem Ventilsitz (42) zugewandten Seite mit einem Dichtelement (45) versehen sowie von einer dritten Druckfeder (46) gegen den Federteller (29) gedrückt wird.

4. Luftfederungsanlage eines Kraftfahrzeugs, mit mindestens zwei Federbälgen (3, 4), die auf gegenüberliegenden Fahrzeugseiten einer Fahrzeugachse angeordneten Luftfedern zugeordnet und über jeweils mit einem Niveauregelventil (5, 6) versehene Anschlussleitungen (7, 8) mit einer Hauptdruckleitung (9) verbindbar und gegenüber dieser absperrbar sind, wobei die Hauptdruckleitung (9) über ein Hauptdruckventil (10) wechselweise mit einer Druckluftquelle (12) und einer Druckluftsenke (11) verbindbar ist, und wobei die Anschlussleitungen (7, 8) der mindestens zwei Federbälge (3, 4) über eine mit einer Drossel (14) versehene und durch ein Sperrventil (15, 47) absperrbare Verbindungsleitung (13, 13') miteinander in Verbindung stehen, **dadurch gekennzeichnet, dass** das Sperrventil (47) mechanisch ansteuerbar ausgebildet ist und derart mit dem Hauptdruckventil (10) gekoppelt ist, dass das Sperrventil (47) bei mit der Druckluftquelle (12) verbundener Hauptdruckleitung (9) geöffnet und bei mit der Druckluftsenke (11) verbundener Hauptdruckleitung (9) geschlossen ist.

5. Luftfederungsanlage nach Anspruch 4, **dadurch gekennzeichnet, dass** die Verbindungsleitung (13'), die Drossel (14) und das Sperrventil (47) zumindest zusammen mit dem Hauptdruckventil (10) in einem gemeinsamen Ventilblock (48) angeordnet sind.

## Claims

1. Air suspension system of a motor vehicle, comprising at least two spring bellows (3, 4) which are associated with air springs arranged on opposite vehicle sides of a vehicle axle and can be connected to and shut off from a main pressure line (9) via respective connecting lines (7, 8) each provided with a level-regulating valve (5, 6), the main pressure line (9) being connectable via a main pressure valve (10) alternately to a compressed air source (12) and to a compressed air sink (11) and the connecting lines (7, 8) of the at least two spring bellows (3, 4) being connected to one another via a connecting line (13) which is provided with a throttle (14) and can be shut off by a shut-off valve, **characterized in that** the shut-off valve (21) is configured to be activatable mechanically and is coupled to the level-regulating valve (6) of the spring bellows (4) arranged on the nearside of the vehicle in such a way that the shut-off valve (21) is open when the level-regulating valve (6) is closed and is closed when the level-regulating valve (6) is open.

2. Air suspension system according to Claim 1, **characterized in that** the connecting line (13), the throttle (14) and the shut-off valve (21), at least together with the two level-regulating valves (5, 6), are arranged in a common valve block (22).

3. Air suspension system according to Claim 2, **characterized in that** the two level-regulating valves (5', 6') are in the form of seat valves which are arranged in radially adjacent valve bores (23, 24) of a housing (25) of the valve block (22') and each have a respective valve plate (32, 33) which is pressed against a valve seat (30, 31) by a compression spring (26, 27) via a spring disk (28, 29), **in that** the connecting line (13) and the throttle (14) are configured as a throttle bore (36) which connects connecting bores (38, 39) of the two level-regulating valves (5', 6') to one another in a connecting cover (37) of the valve block (22'), **in that** the shut-off valve (21') is in the form of a seat valve which is arranged inside the level-regulating valve (6') of the spring bellows (4) arranged on the nearside of the vehicle, and **in that** the shut-off valve (21') has a valve insert (40) which is fitted into the related connecting bore (39) and has a connecting bore (43) connected via an annular groove (41) to the throttle bore (36) and ending axially in a valve seat (42), together with a sealing block (44) which is in contact with the related spring disk (29) on its side facing away from the valve seat (42), is provided with a sealing element (45) on its side facing towards the valve seat (42) and is pressed against the spring disk (29) by a third compression spring (46).

4. Air suspension system of a motor vehicle, comprising at least two spring bellows (3, 4) which are associated with air springs arranged on opposite vehicle sides of a vehicle axle and can be connected to and shut off from a main pressure line (9) via respective connecting lines (7, 8) each provided with a level-regulating valve (5, 6), the main pressure line (9) being connectable via a main pressure valve (10) alternately to a compressed air source (12) and to a compressed air sink (11) and the connecting lines (7, 8) of the at least two spring bellows (3, 4) being connected to one another via a connecting line (13, 13') which is provided with a throttle (14) and can be shut off by a shut-off valve (15, 47), **characterized in that** the shut-off valve (47) is configured to be activatable mechanically and is coupled to the main pressure valve (10) in such a way that the shut-off valve (47) is open when the main pressure line (9) is connected to the compressed air source (12) and is closed when the main pressure line (9) is connected to the compressed air sink (11).

5. Air suspension system according to Claim 4, **characterized in that** the connecting line (13'), the throttle (14) and the shut-off valve (47), at least together with the main pressure valve (10), are arranged in a common valve block (48).

## Revendications

1. Installation de suspension pneumatique d'un véhicule automobile, comprenant au moins deux soufflets de ressort (3, 4) qui sont associés à des ressorts pneumatiques disposés sur des côtés de véhicule opposés d'un essieu de véhicule et qui peuvent être connectés, par le biais de conduites de raccordement respectives (7, 8) pourvues d'une soupape de régulation de niveau (5, 6), à une conduite de pression principale (9) et être bloqués par rapport à celle-ci, la conduite de pression principale (9) pouvant être connectée par le biais d'une soupape de pression principale (10) de manière alternative à une source d'air comprimé (12) et à une aspiration d'air comprimé (11), et les conduites de raccordement (7, 8) des au moins deux soufflets de ressort (3, 4) étant en liaison l'une avec l'autre par le biais d'une conduite de liaison (13) pourvue d'un étranglement (14) et pouvant être fermée par une soupape d'arrêt, **caractérisée en ce que** la soupape d'arrêt (21) est réalisée de manière à pouvoir être commandée mécaniquement et est accouplée à la soupape de régulation de niveau (6) du soufflet de ressort (4) disposé sur le côté du véhicule extérieur à la chaussée de telle sorte que la soupape d'arrêt (21) soit fermée lorsque la soupape de régulation de niveau (6) est fermée, et soit fermée lorsque la soupape de régulation de niveau (6) est ouverte.

2. Installation de suspension pneumatique selon la revendication 1, **caractérisée en ce que** la conduite de liaison (13), l'étranglement (14) et la soupape d'arrêt (21) sont disposés au moins conjointement avec les deux soupapes de régulation de niveau (5, 6) dans un bloc-soupapes commun (22).

3. Installation de suspension pneumatique selon la revendication 2, **caractérisée en ce que** les deux soupapes de régulation de niveau (5', 6') sont réalisées sous forme de soupapes à siège qui sont disposées dans des alésages de soupape radialement adjacents (23, 24) d'un boîtier (25) du bloc-soupapes (22'), et qui présentent à chaque fois une plaque de soupape (32, 33) pressée par un ressort de compression (26, 27) par le biais d'un ressort Belleville (28, 29) contre un siège de soupape (30, 31), **en ce que** la conduite de liaison (13) et l'étranglement (14) sont réalisés sous la forme d'un alésage d'étranglement (36) qui relie l'un à l'autre des alésages de raccordement (38, 39) des deux soupapes de régulation de niveau (5', 6') disposés dans un couvercle de raccordement (37) du bloc-soupapes (22'), et **en ce que** la soupape d'arrêt (21') est réalisée sous forme de soupape à siège qui est disposée à l'intérieur de la soupape de régulation de niveau (6') du soufflet de ressort (4) disposé du côté du véhicule extérieur à la chaussée, et **en ce que** la soupape d'arrêt (21') présente un insert de soupape (40) inséré dans l'alésage de raccordement concerné (39), avec un alésage de liaison (43) en liaison par le biais d'une rainure annulaire (41) avec l'alésage d'étranglement (36) et se terminant axialement dans un siège de soupape (42), et avec un bloc d'étanchéité (44), qui est en contact du côté opposé au siège de soupape (42), avec le ressort Belleville concerné (29), et qui est pourvu d'un élément d'étanchéité (45) du côté tourné vers le siège de soupape (42) et qui est pressé par un troisième ressort de compression (46) contre le ressort Belleville (29).

4. Installation de suspension pneumatique d'un véhicule automobile, comprenant au moins deux soufflets de ressort (3, 4) qui sont associés à des ressorts pneumatiques disposés sur des côtés de véhicule opposés d'un axe de véhicule et qui peuvent être connectés, par le biais de conduites de raccordement respectives (7, 8) pourvues d'une soupape de régulation de niveau (5, 6), à une conduite de pression principale (9) et être bloqués par rapport à celle-ci, la conduite de pression principale (9) pouvant être connectée par le biais d'une soupape de pression principale (10) de manière alternative à une source d'air comprimé (12) et à une aspiration d'air comprimé (11), et les conduites de raccordement (7, 8) des au moins deux soufflets de ressort (3, 4) étant en liaison l'une avec l'autre par le biais d'une conduite de liaison (13, 13') pourvue d'un étranglement (14) et pouvant être fermées par une soupape d'arrêt (15, 47), **caractérisée en ce que** la soupape d'arrêt (47) est réalisée de manière à pouvoir être commandée mécaniquement et est accouplée à la soupape de pression principale (10) de telle sorte que la soupape d'arrêt (47) soit ouverte lorsque la conduite de pression principale (9) est connectée à la source d'air comprimé (12) et soit fermée lorsque la conduite de pression principale (9) est connectée à l'aspiration d'air comprimé (11).

5. Installation de suspension pneumatique selon la revendication 4, **caractérisée en ce que** la conduite de liaison (13'), l'étranglement (14) et la soupape d'arrêt (47) sont disposés au moins conjointement avec la soupape de pression principale (10) dans un bloc-soupapes commun (48).
